# EUROPÄISCHE PATENTSCHRIFT

(11) **EP 3 052 276 B1**
(45) Veröffentlichungstag und Bekanntmachung des Hinweises auf die Patenterteilung: **18.12.2019**
(21) Anmeldenummer: 14766445.2
(22) Anmeldetag: 10.09.2014
(51) Int. Cl.: B26B 11/00, B26B 3/00

(54) **MESSER MIT EINEM AM ERL ANGEORDNETEN RFID-TRANSPONDER**
KNIFE HAVING AN RFID TRANSPONDER ARRANGED ON THE TANG
COUTEAU POURVU D'UN TRANSPONDEUR RFID DISPOSÉ SUR UNE SOIE

(30) Priorität: 01.10.2013 DE 102013219875
(43) Veröffentlichungstag der Anmeldung: 10.08.2016
(73) Patentinhaber: Friedr. Dick GmbH & Co. KG, 73779 Deizisau (DE)
(72) Erfinder: LÖHNERT, Horst, 73760 Ostfildern (DE)
(74) Vertreter: Eisenführ Speiser
(86) Internationale Anmeldenummer: PCT/EP2014/069319
(87) Internationale Veröffentlichungsnummer: WO 2015/049096

(56) Entgegenhaltungen:
- WO-A1-01/42991
- WO-A1-2005/108183
- DE-A1-102006 012 070
- DE-A1-102008 026 678
- DE-U1-202006 008 789

## Beschreibung

Die Erfindung betrifft ein Messer, umfassend
- eine Messerklinge mit einem Erl,
- einen RFID-Transponder, der am Erl befestigt ist, und
- einen Messergriff, der den Erl und den RFID-Transponder umschließt.

Eine solches Messer ist aus der WO 01/429991 A1 bekannt geworden.

Bei der Lebensmittelverarbeitung, insbesondere der Fleisch- und Fischverarbeitung oder auch der Obst- und Gemüseverarbeitung, spielen Sauberkeit und Hygiene eine sehr große Rolle. Typischerweise werden die Lebensmittel unter möglichst keim- und verschmutzungsarmen Bedingungen verarbeitet. Breiten sich dennoch Keime bei der Verarbeitung der Lebensmittel zu stark aus, können diese bei den Konsumenten der Lebensmittel schwere gesundheitliche Schäden hervorrufen.

In lebensmittelverarbeitenden Betrieben werden insbesondere Messer in vielfältiger Weise eingesetzt, um die Lebensmittel für den Verzehr oder für eine weitere Verarbeitung vorzubereiten. Die Messer kommen mit einer Vielzahl von nacheinander verarbeiteten Lebensmitteln in Berührung und müssen daher regelmäßig gereinigt werden, um eine Einschleppung von Keimen in ganze Chargen von Lebensmitteln zu verhindern.

Mit einem RFID-Transponder (RFID: Radio frequency identification, Hochfrequenzidentifikation) an einem Messer kann die regelmäßige Reinigung des Messers überprüft werden. RFID-Lesegeräte werden dazu an Reinigungsstationen installiert, und für eine Reinigung überfällige Messer können dadurch erkannt werden, dass ein über seinen RFID-Transponder identifizierbares Messer nicht bis zu einem vorgesehenen Zeitpunkt von einem Lesegerät an einer Reinigungsstation ausgelesen wurde. Nötigenfalls können Hinweismeldungen an die Durchführung einer vorgeschriebenen Reinigung erinnern. Weiterhin kann durch RFID-Lesegeräte an überwachten Raumzugängen oder Raumausgängen eine Verbringung von Messern in hygienisch unsichere Bereiche leicht aufgedeckt werden, vgl. hierzu die WO 01/429991 A1.

Die Zuverlässigkeit der Überwachung des Umlaufs von Messern mittels RFID hängt von der Zuverlässigkeit des Auslesens der RFID-Transponder an den Messern ab durch die RFID-Lesegeräte ab. Wenn ein Messer nicht zuverlässig beispielsweise an einem Raumausgang oder an einer Reinigungsstation ausgelesen wird, kann die Hygiene in einem lebensmittelverarbeitenden Betrieb nicht sichergestellt werden.

Aus der WO 01/42991 A1 ist es bekannt, einen zylindrischen RFIDTransponder in einen Durchbruch im Erl eines Messers einzuführen, so dass der zylindrische Transponder senkrecht zu den Seitenflächen des Erl ausgerichtet ist. Der Erl samt dem RFID-Transponder wird mit einem Kunststoff umspritzt, um den Messergriff zu fertigen.

Die EP 2 043 826 81 beschreibt ein Messer mit einem RFID-Transponder, wobei an einem klingenfernen Ende des Erls ein Transponder über ein Abstandhalteelement aus Kunststoff am Erl befestigt ist. Ein Griff des Messers wird durch Umspritzen des Erls mitsamt dem Abstandhalteelement und dem Transponder gefertigt.

Aus der WO 2005/108183 A1 ist es auch bekannt geworden, einen RFID-Transponder auf ein Messer aufzukleben oder in den Handgriff des Messers einzuarbeiten.

Aus der DE 10 2008 026 678 A1 ist ein Handwerkzeug, bestehend aus wenigstens einem metallischen Teil, bekannt. Im metallischen Teil ist eine Öffnung mit einem nach außen geführten Schlitz und in der Öffnung ein RFID-Chip mit einer Koppelschleife angeordnet. Aus der DE 20 2006 008 789 U1 ist ein Kontaktelement zum Herstellen einer Verbindung zwischen RFID-Chip und einer Antennenstruktur bekannt, welches auf einem Substrat eine elektrisch leitende Struktur und einen mit ihr verbundenen RFID-Chip enthält.

### Aufgabe der Erfindung

Der Erfindung liegt die Aufgabe zugrunde, ein Messer mit einem RFID-Transponder vorzustellen, bei dem die Zuverlässigkeit des Auslesens durch ein RFID-Lesegerät erhöht ist.

### Kurze Beschreibung der Erfindung

Diese Aufgabe wird gelöst durch ein Messer der eingangs genannten Art, wobei die Messerklinge aus Metall, insbesondere Stahl, gefertigt ist, dadurch gekennzeichnet, dass der RFID-Transponder eine Antenne aufweist, und dass zumindest ein Teil der Antenne des RFID-Transponders eben ausgebildet und parallel zu einer ebenen Seitenfläche des Erls angeordnet ist.

In einer Variante ist die Antenne des RFID-Transponders galvanisch mit dem Erl verbunden.

Die vorliegende Erfindung schlägt vor, die Messerklinge und deren in einem Handgriff eines erfindungsgemäßen Messers verlaufende Fortsetzung, d.h. den Erl, in die Antennenfunktion des RFID-Transponders zu integrieren.

Dadurch lässt sich im Allgemeinen ein deutlich zuverlässigeres Auslesen des RFID-Transponders erreichen. Die Messerklinge ist aus elektrisch leitfähigem Metall gefertigt und kann daher elektrische Ströme, die beim Einstrahlen von Hochfrequenzpulsen durch ein RFID-Lesegerät in der Messerklinge induziert werden, für den RFID-Transponder besser nutzbar machen. Ebenso kann die Messerklinge zur Abstrahlung von Hochfrequenzpulsen, die vom RFID-Transponder als Antwort auf eingestrahlte Hochfrequenzpulse erzeugt werden, nutzbar gemacht werden.

Die Erfindung sieht in ihrer ersten Variante vor, durch Anordnung zumindest eines ebenen Teils der Antenne des RFID-Transponders parallel zu und an bzw. vor einer ebenen Seitenfläche des Erls die Antenne mit dem Erl elektromagnetisch zu koppeln. Der zumindest eine ebene Teil der Antenne überlappt sozusagen mit dem Erl. Typischerweise ist dabei die Antenne zumindest in dem besagten Teil von der Seitenfläche des Erl beabstandet, bevorzugt maximal zwei Millimeter, besonders bevorzugt maximal einen Millimeter, und meist ca. 0,1 bis 0,3 mm (etwa durch einen schichtförmigen, dielektrischen Träger), so dass die Antenne und der Erl galvanisch voneinander getrennt (elektrisch voneinander isoliert) sind. Die parallele Orientierung und der geringe Abstand durch die Befestigung des RFID-Transponders direkt am Erl sorgen für gute elektromagnetische Kopplungseigenschaften.

In ihrer zweiten Variante sieht die Erfindung vor, die Antenne des Transponders galvanisch mit dem Erl zu verbinden. Mit anderen Worten, es wird eine ohmsche Verbindung zwischen der Antenne des RFID-Transponders und dem Erl eingerichtet. Dadurch kann die Klinge in die Antennenfunktion des RFID-Chips unmittelbar integriert werden. In der Regel sind dabei zwischen Antenne und Erl nur ein oder zwei Lötkontakte eingerichtet, oder die Antenne liegt mit einem Abschnitt unmittelbar auf dem Erl an.

Der RFID-Transponder ist im Rahmen der Erfindung bevorzugt passiv ausgebildet, und typischerweise umfasst die Antenne zwei Antennenabschnitte, die mit einem Chip des RFID-Transponders verbunden sind, der die gewünschte RF-Kommunikation besorgt und meist einen Kode zur eindeutigen Identifikation des Messers enthält; der Chip kann aber auch andere Informationen alternativ oder zusätzlich enthalten.

### Bevorzugte Ausführungsformen der Erfindung

### Ausführungsformen zur galvanischen Kopplung

Bei einer bevorzugten Ausführungsform des erfindungsgemäßen Messers mit galvanischer Verbindung zwischen Transponderantenne und Erl ist vorgesehen, dass die Antenne des RFID-Transponders zwei galvanisch voneinander getrennte Antennenabschnitte aufweist, und dass nur einer der Antennenabschnitte mit dem Erl galvanisch verbunden ist, insbesondere wobei die Antennenabschnitte eine unterschiedliche Kapazität und/oder Induktivität aufweisen. In dieser Konfiguration kann der Erl bzw. die Messerklinge besonders effizient in die Antennenfunktion integriert werden; der Erl verlängert sozusagen einen der galvanisch voneinander getrennten Antennenabschnitte. Man beachte, dass der mit dem Erl galvanisch verbundene Antennenabschnitt sehr klein sein kann, und beispielsweise nur noch ein kurzes Leiterstück umfasst, das den Erl mit einem Chip des RFID-Transponders verbindet. Die beiden Antennenabschnitte gelten als galvanisch voneinander getrennt, wenn sie (außer ggf. über den sie verbindenden Chip) keine ohmsche Verbindung zueinander haben. Durch die unterschiedliche Kapazität und/oder Induktivität der Antennenabschnitte kann die Antenne insgesamt auf die Eigenschaften des Erl bzw. der Messerklinge abgestimmt werden, so dass die Antenne samt Messerklinge auf eine gewünschte Hochfrequenz abgestimmt ist.

Vorteilhaft ist auch eine Ausführungsform des erfindungsgemäßen Messers mit galvanischer Verbindung zwischen Transponderantenne und Erl, bei der zumindest ein Teil der Antenne des RFID-Transponders eben ausgebildet und parallel zu einer ebenen Seitenfläche des Erls angeordnet ist. Dadurch können zusätzliche elektromagnetische Kopplungseffekte zwischen dem Teil der Antenne und dem Erl auf einfache Weise genutzt werden (vgl. erste Variante oben); die galvanische Verbindung besteht hier meist nur aus ein oder zwei Lötkontakten.

### Ausführungsformen zur parallelen Anordnung eines ebenen Antennenteils und einer ebenen Seitenfläche des Erls

Bei einer bevorzugten Ausführungsform eines erfindungsgemäßen Messers, bei dem zumindest ein Teil der Antenne eben ausgebildet und parallel zu einer ebenen Seitenfläche des Erls angeordnet ist, ist vorgesehen, dass der zumindest eine eben ausgebildete Teil der Antenne, der parallel zu der ebenen Seitenfläche des Erl angeordnet ist, vor der ebenen Seitenfläche in einem Abstand von maximal 2mm, bevorzugt maximal 1 mm, angeordnet ist. Durch diese räumliche Nähe können regelmäßig sehr gute elektromagnetische Kopplungen zwischen der Antenne und dem Erl erreicht werden. Um einen definierten Abstand einzustellen und eine elektrische Isolation zwischen Antennenteil und Erl zu erreichen, ist meist ein schichtförmiger, dielektrischer Träger oder eine Kunststofffolie zwischen dem ebenen Teil der Antenne und dem Erl vorgesehen.

### Allgemeine Ausführungsformen

Bevorzugt ist weiterhin eine Ausführungsform eines erfindungsgemäßen Messers, bei der der Erl eine oder mehrere Perforationen aufweist, die von der Antenne des RFID-Transponders übergriffen werden. Dadurch kann Hochfrequenzstrahlung durch die Perforationen an die Antenne gelangen, und so Abschirmungseffekte des Erls verringern, um die Zuverlässigkeit eines Auslesens des RFID-Transponders zu erhöhen.

Bei einer bevorzugten Ausführungsform sind alle Teile der Antenne des RFID-Transponders jeweils eben ausgebildet und parallel zu einer ebenen Seitenfläche des Erls angeordnet. Dies ist einerseits mechanisch besonders einfach und robust bei der Fertigung, und ermöglicht andererseits auch eine elektromagnetische Ankoppelung der Antenne an den Erl über eine maximale Antennenfläche bzw. Leiterlänge.

Vorteilhaft ist eine Weiterbildung dieser Ausführungsform, bei der zwei Teile der Antenne an einander gegenüberliegenden, ebenen Seitenflächen des Erl angeordnet sind. In diesem Fall ist typischerweise ein Chip, der die beiden Teile der Antenne verbindet, an einer schmalen Seite des Erl angeordnet. Bei dieser Ausführungsform sind Abschirmungseffekte durch den Erl besonders gering, und praktisch beliebige Orientierungen des Messers können sehr gut mit deinem RFID-Lesegerät ausgelesen werden.

Bei einer alternativen Weiterbildung der obigen Ausführungsform sind alle Teile der Antenne an derselben ebenen Seitenfläche des Erl angeordnet. Dies ist mechanisch einfach und besonders robust. Man beachte, dass die Antenne in diesem Fall vollständig eben ausgebildet ist.

Besonders bevorzugt ist eine andere Ausführungsform, bei der zumindest ein Teil der Antenne des RFID-Transponders über den Erl hinausragt, insbesondere an einem hinteren, von einer Schneide der Messerklinge abgewandten Ende des Erls. Dieser Teil der Antenne ist von Abschirmungseffekten (Abschattungseffekten) des leitfähigen Erls praktisch nicht betroffen, so dass bei dieser Ausführungsform ein besonders zuverlässiges Auslesen des Transponders des Messers ermöglicht wird. Man beachte, dass die Antenne in dieser Ausführungsform typischerweise auch vollständig eben ausgebildet ist.

Bei einer vorteilhaften Ausführungsform ist eine bezüglich des Erl zusätzliche Metallunterlage, insbesondere eine Metallfolie oder ein Metallplättchen, vorgesehen, die zumindest einen Teil der Antenne des RFID-Transponders untergreift. Mit Hilfe der Metallunterlage kann Hochfrequenzstrahlung gezielt zur Antenne oder von der Metallunterlage weg reflektiert werden, wodurch RFID-Leseprozesse vereinfacht werden können. Da die Metallunterlage unabhängig vom Erl ist, kann ein gewünschtes Reflektionsverhalten weitgehend ohne Rücksicht auf die genaue Lage des RFID-Transponders am Erl eingerichtet werden. Meist wird die Metallunterlage zunächst mit dem RFID-Transponder verbunden, und dieser Verbund sodann am Erl befestigt. Eine bevorzugte Weiterbildung dieser Ausführungsform sieht vor, dass die zusätzliche Metallunterlage einen Teil der Antenne untergreift, der über den Erl hinausragt. Dadurch kann in einem Bereich, wo der Erl für eine Reflektion von Hochfrequenzstrahlung nicht zur Verfügung steht, dennoch eine Führung oder Ausrichtung von Hochfrequenzstrahlung gezielt eingerichtet werden.

Bei einer vorteilhaften Weiterbildung ist die zusätzliche Metallunterlage galvanisch mit dem Erl verbunden. Dadurch kann die Metallunterlage wie der Erl in die Antennenfunktion des RFID-Transponders integriert werden. Alternativ ist die zusätzliche Metallunterlage vom Erl galvanisch getrennt (elektrisch isoliert), insbesondere um ein eigenes Abstimmungselement für die Abstimmung der Antenne auf eine gewünschte Frequenz einzurichten.

Besonders bevorzugt ist eine Ausführungsform, bei der die Antenne auf einem schichtförmigen, dielektrischen Träger angeordnet ist. Dadurch kann ein unbeabsichtigter Kurzschluss zwischen Antenne und Erl ausgeschlossen werden. Weiterhin kann die induktive und/oder kapazitive Kopplung zwischen Antenne und Erl genau eingestellt werden. Eine typische Dicke des dielektrischen (isolierenden) Trägers beträgt 0,1 mm bis 2 mm.

In den Rahmen der vorliegenden Erfindung fällt auch ein Verfahren zur Herstellung eines Messers, insbesondere eines erfindungsgemäßen Messers mit einem ebenen Antennenteil, der an einer ebenen Seitenfläche des Erl anliegt, mit folgenden Schritten:
a) Befestigung eines RFID-Transponders auf einem Erl, wobei zumindest ein ebener Teil einer Antenne des RFID-Transponders parallel zu einer ebenen Seitenfläche des Erls angeordnet wird,
b) Fertigung eines Messergriffes, indem der Erl und der RFID-Transponder mit einem Kunststoff umspritzt oder umgossen werden, insbesondere im Spritzgußverfahren. Dies ist eine einfache Methode, um ein Messer mit verbesserter Zuverlässigkeit beim Auslesen des RFID-Transponders herzustellen. Insbesondere kann der Griff einstufig (mit nur einem Spritz- oder Gießprozess) hergestellt werden.

In den Rahmen der vorliegenden Offenbarung fällt auch ein Verfahren zur Herstellung eines Messers, insbesondere eines erfindungsgemäßen Messers mit galvanischer Verbindung zwischen Antenne und Erl, mit folgenden Schritten:
a) Befestigung eines RFID-Transponders auf einem Erl, wobei eine Antenne des RFID-Transponders galvanisch mit dem Erl verbunden wird,
b) Fertigung eines Messergriffes, indem der Erl und der RFID-Transponder mit einem Kunststoff umspritzt oder umgossen werden, insbesondere im Spritzgußverfahren. Diese Methode stellt eine unmittelbare Integration des Erls bzw. der Messerklinge in die Antennenfunktion sicher, wodurch ebenfalls eine verbesserte Zuverlässigkeit beim Auslesen des RFID-Transponders erreicht werden kann. Auch hier kann der Griff einstufig (mit nur einem Spritz- oder Gießprozess) hergestellt werden.

In einer bevorzugten Variante des letztgenannten Verfahrens wird in Schritt a) ein Lötkontakt zwischen der Antenne und dem Erl eingerichtet. Ein Lötkontakt stellt auf einfache und zuverlässige Weise eine galvanische (ohmsch leitfähige) Verbindung sicher.

Eine andere Variante des letztgenannten Verfahrens sieht vor, dass in Schritt a) ein Teil der Antenne direkt auf dem Erl aufgelegt wird und durch Erwärmen eines Schrumpflacks oder Schrumpfschlauchs, der den Teil der Antenne und den Erl umhüllt, der Teil der Antenne und der Erl aneinander gepresst werden. Dadurch lässt sich ebenfalls zuverlässig eine galvanische Verbindung zwischen Erl und Antenne einrichten, wobei ein Löten nicht erforderlich ist. Die Temperaturen, bei denen ein Schrumpflack oder ein Schrumpfschlauch sich zusammenzieht sind sehr viel niedriger als typische Löttemperaturen, so dass durch das Vorgehen in dieser Variante etwaige temperaturempfindliche Elemente (etwa ein dielektrischer Träger) geschont werden können.

Bei einer anderen Variante der erfindungsgemäßen Verfahren wird in Schritt a) der RFID-Transponder auf dem Erl festgeklebt. Dadurch ist eine gewünschte (korrekte) Positionierung des RFID-Transponders am Erl während des weiteren Herstellungsverfahrens, insbesondere eines Spritz- oder Gießschritts, auf einfache Weise sichergestellt.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1a: eine schematische Seitenansicht einer Messerklinge mit Erl für ein erfindungsgemäßes Messer; wobei der Erl Perforationen aufweist;
- Fig. 1b: die Messerklinge von Fig. 1a, mit einem vollständig auf einer ebenen Seitenfläche des Erl befestigtem RFID-Transponder;
- Fig. 1c: einen schematischen Querschnitt durch die Messerklinge von Fig. 1b bei der Schnittebene Ic;
- Fig. 1d: einen schematischen Längsschnitt durch die Messerklinge von Fig. 1b bei der Schnittebene Id;
- Fig. 1e: eine Ausführungsform eines erfindungsgemäßen Messers, mit der Messerklinge von Fig. 1b, und mit gegossenem Messergriff;
- Fig. 2: eine schematische Seitenansicht einer Messerklinge mit Erl für ein erfindungsgemäßes Messer, mit einem auf einer ebenen Seitenfläche des Erl befestigtem RFID-Transponder, der über das schneidenabgewandte Ende des Erl hinaus ragt;
- Fig. 3a: eine schematische Seitenansicht einer Messerklinge mit Erl für ein erfindungsgemäßes Messer, mit einem auf einer ebenen Seitenfläche des Erl befestigtem RFID-Transponder, der über das schneidenabgewandte Ende des Erl hinaus ragt, wobei der RFID-Transponder auf einer zusätzlichen Metallunterlage angeordnet ist;
- Fig. 3b: einen schematischen Querschnitt durch die Messerklinge von Fig. 3a bei Schnittebene IIIb;
- Fig. 4a: eine schematische Seitenansicht einer Messerklinge mit Erl für ein erfindungsgemäßes Messer, mit einem den Erl umgreifenden RFID-Transponder;
- Fig. 4b: eine schematische Aufsicht auf die Messerklinge von Fig. 4a in Pfeilrichtung IVb;
- Fig. 5a: eine schematische Seitenansicht einer Messerklinge mit Erl für ein erfindungsgemäßes Messer, mit einem auf einer ebenen Seitenfläche des Erl befestigtem RFID-Transponder, der über das klingenabgewandte Ende des Erl hinaus ragt, mit am Erl direkt aufliegender Antenne;
- Fig. 5b: eine schematische Seitenansicht der Messerklinge von Fig. 5a, von der gegenüberliegenden Seite gesehen;
- Fig. 5c: einen schematischen Querschnitt durch die Messerklinge von Fig. 5a bei Schnittebene Vc;
- Fig. 6a: eine schematische Seitenansicht einer Messerklinge mit Erl für ein erfindungsgemäßes Messer; wobei der Erl ohne Perforationen ausgebildet ist;
- Fig. 6b: die Messerklinge von Fig. 6a, mit einem auf einer ebenen Seitenfläche des Erl befestigten RFID-Transponder, der über das schneidenabgewandte Ende des Erl hinausragt, wobei die Antenne des RFID-Transponders über einen Lötkontakt durch einen dielektrischen Träger hindurch galvanisch mit dem Erl verbunden ist;
- Fig. 6c: einen schematischen Querschnitt durch die Messerklinge von Fig. 6b bei Schnittebene Vc;
- Fig. 6d: eine weitere Ausführungsform eines erfindungsgemäßen Messers, mit der Messerklinge von Fig. 6b, und mit gegossenem Messergriff;
- Fig. 7: eine schematische Seitenansicht einer Messerklinge mit Erl für ein erfindungsgemäßes Messer, wobei an einem schneidenfernen Ende des Erl ein RFID-Transponder befestigt ist, dessen Antenne durch einem Lötkontakt mit dem Erl galvanisch verbunden ist.

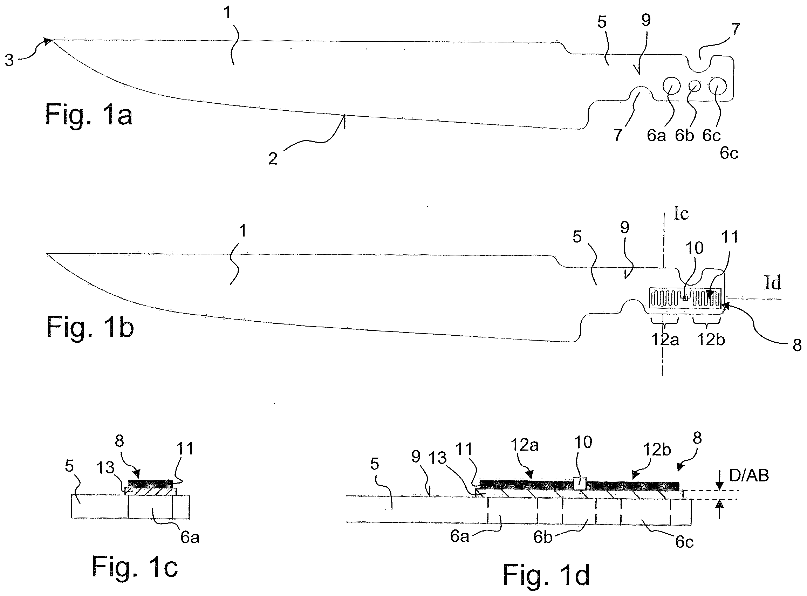

Die Figuren 1a bis 1d illustrieren eine Variante einer erfindungsgemäßen Herstellung einer Ausführungsform eines erfindungsgemäßen Messers, wobei zumindest ein Teil der Antenne eines RFID-Transponders eben ausgebildet ist und auf einer ebenen Seitenfläche des Erl angeordnet ist.

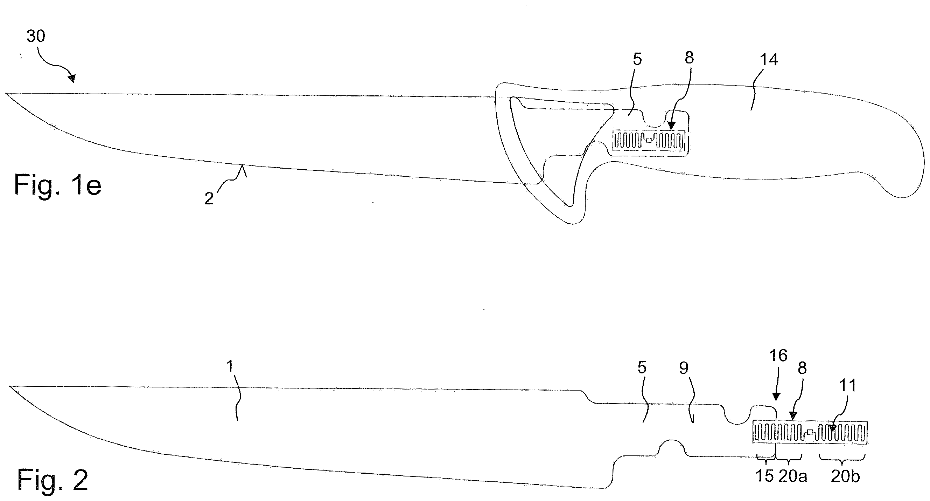

Fig. 1a zeigt eine Messerklinge 1 für das erfindungsgemäße Messer. Die Messerklinge 1 weist eine Schneide 2 und hier auch eine Spitze 3 auf; man beachte, dass das vordere Ende der Messerklinge 1 auch abgerundet ausgebildet sein kann (nicht dargestellt), und die Messerklinge 1 auch zweischneidig ausgebildet sein kann (nicht dargestellt). Am hinteren Ende der Messerklinge 1 ist ein Erl 5 ausgebildet, der beim vollständigen Messer innerhalb eines Messergriffs angeordnet ist (vgl. hierzu Fig. 1e später). Die Messerklinge 1, einschließlich Erl 5, ist aus einem elektrisch leitfähigen Metall, insbesondere rostfreiem Edelstahl, gefertigt. Der Erl 5 weist in der gezeigten Ausführungsform mehrere Perforationen (durchgehende Löcher) 6a, 6b, 6c auf. Weiterhin sind Kerben 7 im Erl 5 vorgesehen, die für die maschinelle Handhabung des Erl 5 genutzt werden können.

In der gezeigten Variante wird sodann auf einer ebenen Seitenfläche 9 des Erl 5 ein RFID-Transponder 8 befestigt, insbesondere aufgeklebt, vgl. **Fig. 1b****.** Der RFID-Transponder 8 verfügt über einen Chip 10 und eine zweiteilige Antenne 11 mit hier meanderförmigen, in einer Ebene verlaufenden Leitern. Im gezeigten Beispiel sind der erste, in Fig. 1b linksseitige Teil 12a der Antenne 11 und der zweite, in Fig. 1b rechtsseitige Teil 12b der Antenne 11 spiegelsymmetrisch ausgebildet; beide Teile 12a, 12b sind an den Chip 10 angeschlossen, im Übrigen aber galvanisch voneinander getrennt.

Wie in dem Querschnitt von **Fig. 1c** und dem Längsschnitt von **Fig. 1d** ersichtlich, übergreift der RFID-Transponder 8 die Perforationen 6a, 6b, 6c, so dass auch durch den Erl 5 hindurch Hochfrequenzstrahlung an die Unterseite der Antenne 11 gelangen kann; der RFID-Transponder 8 ragt hier jedoch nicht über den Erl 5 hinaus (d.h. der Erl 5 überlappt mit der gesamten Länge des RFID-Transponders 8). Der RFID-Transponder 8 verfügt im gezeigten Beispiel über einen ebenen, schichtförmigen, dielektrischen Träger 13 (typischerweise aus Kunststoff), auf dem die Antenne 11 und der Chip 10 aufgebracht (insbesondere aufgedruckt) sind. Der dielektrische Träger 13 hat eine Dicke D von typischerweise 2 mm oder weniger. Durch den dielektrischen Träger 13 ist die Antenne 11 elektrisch vom Erl 5 isoliert; zugleich wird der Abstand AB, den die Antenne 11 (bzw. deren ebene Teile 12a, 12b) von der parallel angeordneten ebenen Seitenfläche 9 des Erls 5 hat, eingestellt.

Aufgrund der räumlichen Nähe des Erl 5 und der gegenseitigen Ausrichtung kann die Antenne 11 gut induktiv und/oder kapazitiv an den Erl 5 bzw. die gesamte Messerklinge 1 koppeln. Über die Dicke D und das Material des dielektrischen Trägers 13 (insbesondere dessen Dielektrizitätszahl) kann die elektromagnetische Kopplung feinjustiert werden.

Schließlich wird, wie in **Fig. 1e** ersichtlich, der Erl 5 mitsamt dem RFID-Transponder 8 mit einem Kunststoff umspritzt, wodurch ein Messergriff 14 ausgebildet wird (verdeckte Elemente sind dabei gestrichelt dargestellt). Damit ist ein erfindungsgemäßes Messer 30 hergestellt. Typischerweise wird das Messer 30 (bzw. dessen Schneide 2) anschließend noch geschliffen.

Soweit die nachfolgenden Ausführungsformen und Varianten den Darstellungen von Fig. 1a-1e entsprechen, wird dies nicht besonders erwähnt, sondern es werden vor allem die Unterschiede näher erläutert.

In der **Fig. 2** ist eine Messerklinge 1 für die Erfindung dargestellt, wobei ein RFID-Transponder 8 am Erl 5 so befestigt ist, dass nur ein erster Teil 15 der Antenne 11 des RFID-Transponders 8 auf einer ebenen Seitenfläche 9 des Erl 5 angeordnet ist; der Rest der Antenne 11, mit den Teilen 20a, 20b, ragt über das schneidenabgewandte Ende 16 des Erl 5 hinaus. Dadurch ist dieser Rest der Antenne 11 besonders gut für Hochfrequenzstrahlung eines RFID-Lesegeräts zugänglich.

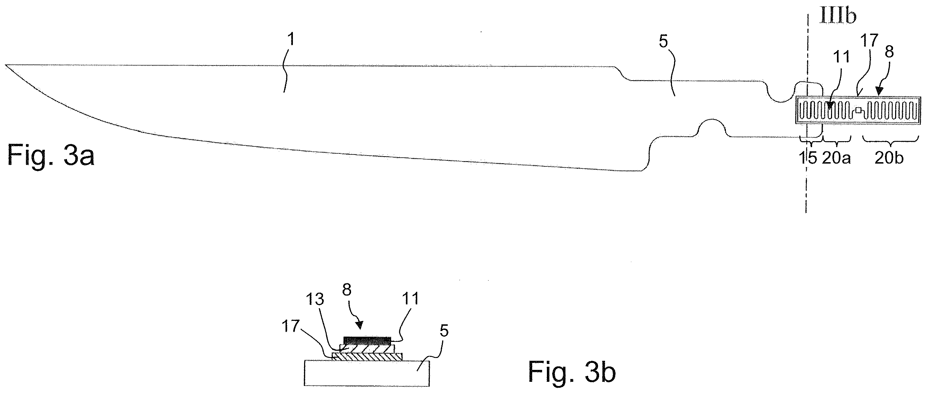

In **Fig. 3a** ist eine weitere Messerklinge 1 für die Erfindung dargestellt. Auch hier überlappt der RFID-Transponder 8 nur mit einem Teil 15 der Antenne 11 mit dem Erl 5, und der Rest mit den Teilen 20a, 20b der Antenne 11 ragt über den Erl 5 hinaus.

Allerdings ist der RFID-Transponder 8 hier auf einer zusätzlichen Metallunterlage 17 angeordnet, die zwischen einem dielektrischem Träger 13 und dem Erl 5 angeordnet ist, vgl. **Fig. 3b****.** Die Metallunterlage 17 ist hier als ein steifes Metallplättchen aus Stahlblech ausgebildet. Die Metallunterlage 17 untergreift den RFID-Transponder 8 insbesondere in dem Bereich, der über den Erl 5 jenseits des hinteren Endes 16 hinausragt, und hier auch ein dem Überlappungsbereich mit dem Erl 5. Die Metallunterlage 17 ist im gezeigten Beispiel galvanisch mit dem Erl 5 verbunden, da die Metallunterlage 17 direkt auf dem Erl 5 aufliegt. Falls gewünscht, kann die Metallunterlage 17 auf dem Erl 5 aufgelötet werden.

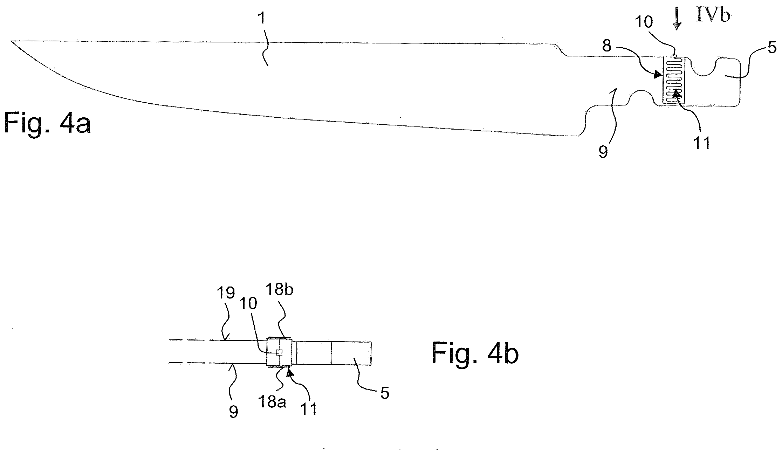

**Fig. 4a** illustriert eine Messerklinge 1 für die Erfindung, wobei ein RFID-Transponder 8 sattelartig auf dem Rücken des Erl 5 der Messerklinge 1 aufsitzt.

Wie auch aus der Aufsicht von **Fig. 4b** ersichtlich, ist ein erster, in Fig. 4b unterer, ebener Teil 18a der Antenne 11 auf einer ersten ebenen Seitenfläche 9 des Erl 5 angeordnet, und ein zweiter, in Fig. 4b oberer ebener Teil 18b der Antenne 11 ist auf einer zweiten ebenen Seitenfläche 19 des Erl 5 angeordnet, wobei die zweite Seitenfläche 19 der ersten Seitenfläche 9 gegenüber liegt. Der Chip 10 sitzt mittig auf dem Rücken des Erl 5 und ist mit den beiden Teilen 18a, 18b der Antenne 11 elektrisch leitend verbunden.

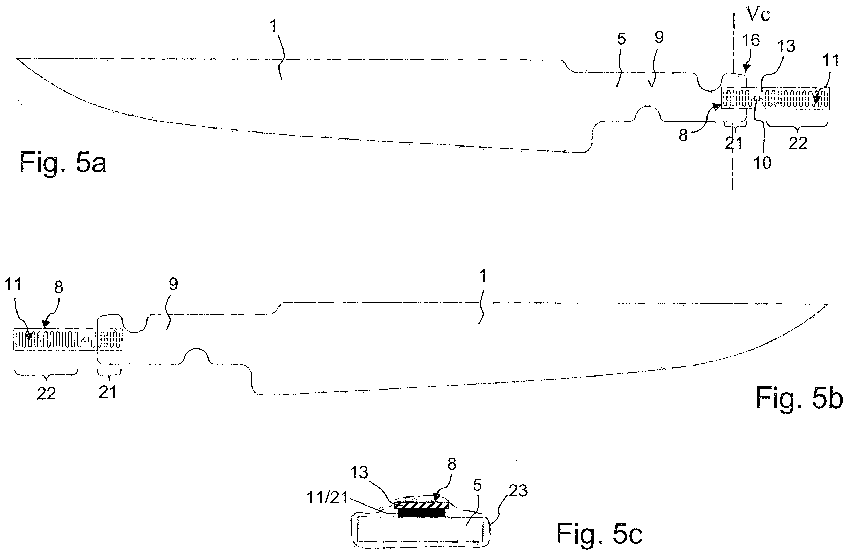

In **Fig. 5a** ist eine Messerklinge 1 für die Erfindung gezeigt, bei der ein RFID-Transponder 8 mit einem Abschnitt (Teil) 21 seiner Antenne 11 auf dem Erl 5 direkt aufliegt und dadurch unmittelbar einen galvanischen Kontakt zwischen dem aufliegenden Abschnitt 21 und dem Erl 5 herstellt. Der übrige Abschnitt (Teil) 22 der Antenne 11 ragt über den Erl 5 jenseits des hinteren Endes 16 des Erl 5 hinaus. Da in Fig. 5a die Antenne 11 von einem dielektrischen Träger 13 verdeckt wird, ist die Antenne 11 nur gestrichelt angedeutet. Die beiden Abschnitte 21, 22 haben keine elektrisch leitende Verbindung (d.h. sind galvanisch getrennt), sie sind aber beide mit dem Chip 10 elektrisch leitend verbunden.

In **Fig. 5b** ist die Messerklinge 1 von der gegenüberliegenden Seite zu Fig. 5a zeigt, wobei der Abschnitt (Teil) 21 der Antenne 11 durch den Erl 5 verdeckt wird und daher wiederum gestrichelt dargestellt ist. Man beachte, dass hier der Abschnitt 21 der Antenne 11 sehr viel kürzer ausgebildet ist als der Abschnitt 22 der Antenne 11. Durch eine ungleiche Aufteilung der Antenne 11 kann diese (auch in Hinblick auf die hier galvanische Kopplung mit dem Erl 5) auf eine gewünschte Frequenz abgestimmt werden.

In der **Fig. 5c****,** die einen Querschnitt durch die Messerklinge 1 im Bereich des ebenen, auf der ebenen Seitenfläche 9 des Erl 5 aufliegenden Abschnitts (Teils) 21 der Antenne 11 zeigt, ist der direkte Kontakt zwischen der Antenne 11 und dem Erl 5 ersichtlich; der dielektrische Träger 13, auf dem die Antenne 11 angeordnet ist, ist vom Erl 5 abgewandt. Um die Antenne 11 dauerhaft auf den Erl 5 zu drücken, kann ein Schrumpflack 23, der um den Erl 5 und den RFID-Transponder 8 im Bereich des Abschnitts 21 gestrichen wird, eingesetzt werden. Der Schrumpflack 23 zieht sich nach einer Erwärmung zusammen und wird dadurch unter elastische Zugspannung gesetzt, wodurch die Antenne 11 auf den Erl 5 zu gezwungen wird. Anstelle eines Schrumpflacks 23 kann auch eine Hülse aus Schrumpfschlauch eingesetzt werden, die über den RFID-Transponder 8 und den Erl 5 in deren Überlappbereich gezogen und erwärmt wird.

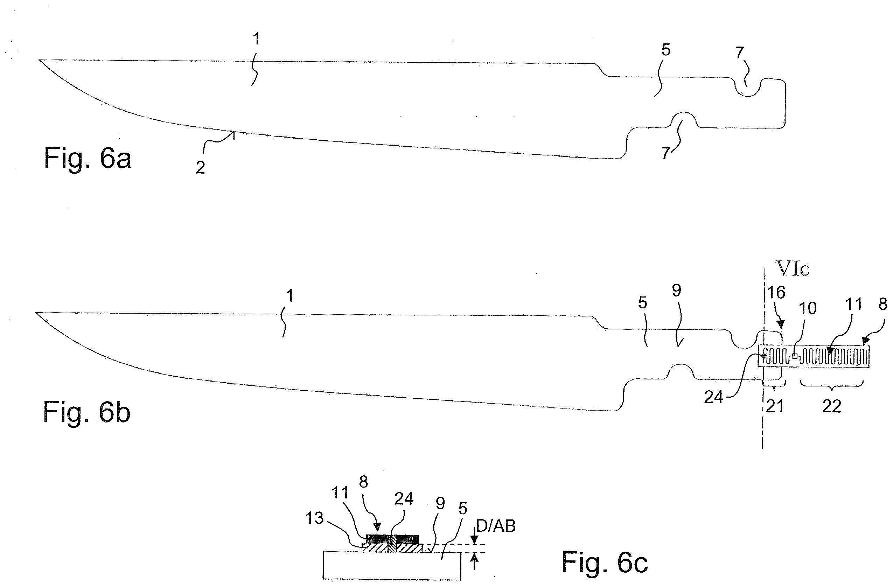

Die Figuren 6a bis 6d illustrieren eine Variante einer erfindungsgemäßen Herstellung einer Ausführungsform eines erfindungsgemäßen Messers, wobei ein galvanischer Kontakt zwischen der Antenne eines RFID-Transponders und einem Erl über einen Lötpunkt eingerichtet wird.

In der **Fig. 6a** ist zunächst eine Messerklinge 1 mit einer Schneide 2 und einem Erl 5 dargestellt, mit der ein erfindungsgemäßes Messer erfindungsgemäß hergestellt wird. Der Erl 5 verfügt hier über Kerben 7 für einen leichten Maschineneingriff, aber hier nicht über Perforationen.

Am Erl 5 wird nun ein RFID-Transponder 8 angebracht, vgl. **Fig. 6b****,** wobei der Bereich eines ebenen Abschnitts (Teils) 21 einer Antenne 11 des RFID-Transponders 8 an einer ebenen Seitenfläche 9 des Erl 5 angeordnet und befestigt, insbesondere aufgeklebt, wird. Man beachte, dass der Abschnitt 21 der Antenne 11 aufgrund einer deutlich kleineren Länge eine andere Induktivität und Kapazität aufweist als der gegenüber dem Erl 5 jenseits dessen hinteren Endes 16 überstehende Abschnitt (Teil) 22. Die Abschnitte 21 und 22 der Antenne 11 sind galvanisch voneinander getrennt (d.h. nicht miteinander elektrisch leitend verbunden), aber beide an den Chip 10 des RFID-Transponders 8 angeschlossen.

Ein dielektrischer Träger 13 des RFID-Transponders 8 weist einen Durchbruch auf, in welchem ein Batzen Lötzinn angeordnet ist, der als Lötkontakt 24 die Antenne 11 am äußeren Ende des Abschnitts (Teils) 21 mit dem Erl 5 elektrisch leitend verbindet, wie im Querschnitt von **Fig. 6c** ersichtlich. Der Erl 5 bzw. die gesamte Messerklinge 1 verlängert dadurch effektiv den Abschnitt 21 der Antenne 11. Durch die Überlappung der Antenne 11 im Abschnitt 21 mit dem Erl 5 ist die Antenne 11 auch noch elektromagnetisch an den Erl 5 gekoppelt, was für eine Feinabstimmung der Resonanzen im RFID-Transponder 8 genutzt werden kann. Dabei kann insbesondere auch die Dicke D des dielektrischen Trägers bzw. der Abstand AB des ebenen Antennenabschnitts 21 von der ebenen Seitenfläche 9 des Erls 5 gezielt gewählt werden.

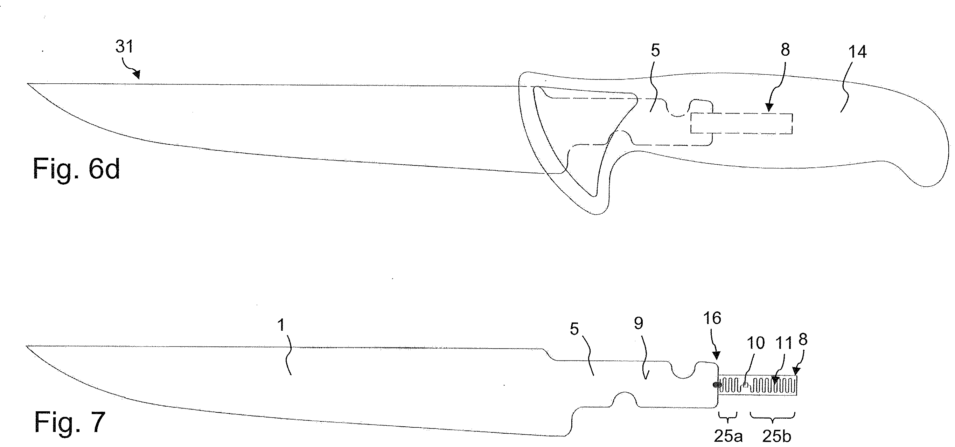

Der Erl 5 mitsamt dem RFID-Transponder 8 wird anschließend mit Kunststoff umspritzt, um einen Messergriff 14 für das erfindungsgemäße Messer 31 zu fertigen, vgl. **Fig. 6d****.** Die vom Messergriff 14 überdeckten Teile sind wiederum gestrichelt dargestellt.

In **Fig. 7** ist eine Messerklinge 1 für die Erfindung dargestellt, bei der der RFID-Transponder 8 nicht an einer ebenen Seitenfläche 9 des Erl 5, sondern anschließend an das hintere, schneidenabgewandte Ende 16 des Erl 5 am Erl 5 befestigt ist, beispielsweise durch Ankleben. Eine hier galvanische Kopplung wird mit einem Lötkontakt 24 zwischen einem vorderen Abschnitt (Teil) 25a der Antenne 11 und dem Erl 5 erreicht. Der hintere, längere Abschnitt (Teil) 25b der Antenne 11 ist vom vorderen Abschnitt 25a galvanisch getrennt, wobei beide Abschnitte 25a, 25b jedoch elektrisch mit dem Chip 10 verbunden sind.

Ein erfindungsgemäßes Messer kann insbesondere als Ausbeinmesser ausgebildet sein. Erfindungsgemäße Messer werden insbesondere in Lebensmittelverarbeitungsstätten, insbesondere Schlachthöfen, eingesetzt und mit RFID-Lesegeräten ausgelesen. RFID-Lesegeräte können insbesondere an Reinigungsstation, Desinfektionsstationen, Lagerstation, Raumzugängen und/oder Raumausgängen eingerichtet sein.

## Patentansprüche

1. Messer (30, 31), umfassend
- eine Messerklinge (1) mit einem Erl (5),
- einen RFID-Transponder (8), der am Erl (5) befestigt ist, und
- einen Messergriff (14), der den Erl (5) und den RFID-Transponder (8) umschließt,
- wobei die Messerklinge (1) aus Metall, insbesondere Stahl, gefertigt ist,
**dadurch gekennzeichnet, dass** der RFID-Transponder (8) eine Antenne (11) aufweist, und dass zumindest ein Teil (12a, 12b; 15; 18a, 18b; 21) der Antenne (11) des RFID-Transponders (8) eben ausgebildet und parallel zu einer ebenen Seitenfläche (9; 19) des Erls (5) angeordnet ist.

2. Messer (31) nach Anspruch 1,
**dadurch gekennzeichnet,**
**dass** die Antenne (11) des RFID-Transponders (8) galvanisch mit dem Erl (5) verbunden ist.

3. Messer (31) nach Anspruch 2, **dadurch gekennzeichnet, dass** die Antenne (11) des RFID-Transponders (8) zwei galvanisch voneinander getrennte Antennenabschnitte (21, 22; 25a, 25b) aufweist, und dass nur einer der Antennenabschnitte (21; 25a) mit dem Erl (5) galvanisch verbunden ist,
insbesondere wobei die Antennenabschnitte (21, 22; 25a, 25b) eine unterschiedliche Kapazität und/oder Induktivität aufweisen.

4. Messer (30, 31) nach einem der vorstehenden Ansprüche, **dadurch gekennzeichnet, dass** der zumindest eine eben ausgebildete Teil (12a, 12b; 15; 18a, 18b; 21) der Antenne (11), der parallel zu der ebenen Seitenfläche (9; 19) des Erl (5) angeordnet ist, vor der ebenen Seitenfläche (9; 19) in einem Abstand (AB) von maximal 2 mm, bevorzugt maximal 1 mm, angeordnet ist.

5. Messer (30; 31) nach einem der vorhergehenden Ansprüche, **dadurch gekennzeichnet, dass** der Erl (5) eine oder mehrere Perforationen (6a- 6c) aufweist, die von der Antenne (11) des RFID-Transponders (8) übergriffen werden.

6. Messer (30; 31) nach einem der vorstehenden Ansprüche, **dadurch gekennzeichnet, dass** alle Teile (12a, 12b; 18a, 18b) der Antenne (11) des RFID-Transponders (8) jeweils eben ausgebildet und parallel zu einer ebenen Seitenfläche (9, 19) des Erls (5) angeordnet sind.

7. Messer (30; 31) nach Anspruch 6, **dadurch gekennzeichnet, dass** zwei Teile (18a, 18b) der Antenne (11) an einander gegenüberliegenden, ebenen Seitenflächen (9, 19) des Erl (5) angeordnet sind.

8. Messer (30; 31) nach Anspruch 6, **dadurch gekennzeichnet, dass** alle Teile (12a, 12b) der Antenne (11) an derselben ebenen Seitenfläche (9) des Erl (5) angeordnet sind.

9. Messer (30; 31) nach einem der Ansprüche 1 bis 5, **dadurch gekennzeichnet, dass** zumindest ein Teil (20a, 20b; 22; 25a, 25b) der Antenne (11) des RFID-Transponders (8) über den Erl (5) hinausragt, insbesondere an einem hinteren, von einer Schneide (2) der Messerklinge (1) abgewandten Ende (16) des Erls (5).

10. Messer (30; 31) nach einem der vorhergehenden Ansprüche, **dadurch gekennzeichnet, dass** eine bezüglich des Erl (5) zusätzliche Metallunterlage (17), insbesondere eine Metallfolie oder ein Metallplättchen, vorgesehen ist, die zumindest einen Teil (15, 20a, 20b) der Antenne (11) des RFID-Transponders (8) untergreift.

11. Messer (30; 31) nach Anspruch 10, **dadurch gekennzeichnet, dass** die zusätzliche Metallunterlage (17) einen Teil (20a, 20b) der Antenne (11) untergreift, der über den Erl (5) hinausragt.

12. Messer (30; 31) nach Anspruch 10 oder 11, **dadurch gekennzeichnet, dass** die zusätzliche Metallunterlage (17) galvanisch mit dem Erl (5) verbunden ist.

13. Messer (30; 31) nach einem der vorhergehenden Ansprüche, **dadurch gekennzeichnet, dass** die Antenne (11) auf einem schichtförmigen, dielektrischen Träger (13) angeordnet ist.

14. Verfahren zur Herstellung eines Messers (30; 31), insbesondere eines Messers (30) nach Anspruch 1, mit folgenden Schritten:
a) Befestigung eines RFID-Transponders (8) auf einem Erl (5), wobei zumindest ein ebener Teil (12a, 12b; 15; 18a, 18b; 21) einer Antenne (11) des RFID-Transponders (8) parallel zu einer ebenen Seitenfläche (9) des Erls (5) angeordnet wird,
b) Fertigung eines Messergriffes (14), indem der Erl (5) und der RFID- Transponder (8) mit einem Kunststoff umspritzt oder umgössen werden, insbesondere im Spritzgußverfahren.

15. Verfahren nach Anspruch 14, wobei in Schritt a) eine Antenne (11) des RFID-Transponders (8) galvanisch mit dem Erl (5) verbunden wird.

16. Verfahren nach Anspruch 15, **dadurch gekennzeichnet, dass** in Schritt a) ein Lötkontakt (24) zwischen der Antenne (11) und dem Erl (5) eingerichtet wird.

17. Verfahren nach Anspruch 15, **dadurch gekennzeichnet, dass** in Schritt a) ein Teil (21) der Antenne (11) direkt auf dem Erl (5) aufgelegt wird und durch Erwärmen eines Schrumpflacks (23) oder Schrumpfschlauchs, der den Teil (21) der Antenne (11) und den Erl (5) umhüllt, der Teil (21) der Antenne (11) und der Erl (5) aneinander gepresst werden.

18. Verfahren nach einem der Ansprüche 14 bis 17, **dadurch gekennzeichnet, dass** in Schritt a) der RFID-Transponder (8) auf dem Erl (5) festgeklebt wird.

## Claims

1. A knife (30, 31) comprising:
- a knife blade (1) having a tang (5);
- an RFID transponder (8) which is fixed to the tang (5); and
- a knife handle (14) which surrounds the tang (5) and the RFID transponder (8);
wherein
the knife blade (1) is produced from metal, in particular from steel metal;
**characterized in that**
the RFID transponder (8) has an antenna (11) and at least a portion (12a, 12b; 15; 18a, 18b; 21) of the antenna (11) of the RFID transponder (8) is constructed in a planar manner and is arranged parallel with a planar lateral face (9; 19) of the tang (5).

2. The knife (31) according to claim 1, **characterized in that** the antenna of the RFID transponder (8) is galvanically connected to the tang (5).

3. The knife (31) according to claim 2, **characterized in that** the antenna (11) of the RFID transponder (8) comprises two mutually galvanically separated antenna portions (21, 22; 25a, 25b), and only one of the antenna portions (21; 25a) is galvanically connected to the tang (5), wherein the antenna portions (21, 22; 25a, 25a) in particular have a different capacitance and/or inductivity.

4. The knife (30, 31) according to any of the preceding claims, **characterized in that** the at least one planar portion (12a, 12b; 15; 18a, 18b; 21) of the antenna (11) which is arranged parallel with the planar lateral face (9; 19) of the tang (5) is arranged in front of the planar lateral face (9; 19) with a spacing (AB) of a maximum of 2 mm, preferably of a maximum of 1 mm.

5. The knife (30; 31) according to any of the preceding claims, **characterized in that** the tang (5) has one or more perforations (6a-6c) which are engaged over by the antenna (11) of the RFID transponder (8).

6. The knife (30; 31) according to any of the preceding claims, **characterized in that** all the portions (12a, 12b; 18a, 18b) of the antenna (11) of the RFID transponder (8) are constructed in the planar manner and arranged parallel with the planar lateral face (9, 19) of the tang (5).

7. The knife (30; 31) according to claim 6, **characterized in that** two portions (18a, 18b) of the antenna (11) are arranged at mutually opposing planar lateral faces (9, 19) of the tang (5).

8. The knife (30; 31) according to claim 6, **characterized in that** all the portions (12a, 12b) of the antenna (11) are arranged at the same planar lateral face (9) of the tang (5).

9. The knife (30; 31) according to any of claims 1 to 5, **characterized in that** at least a portion (20a, 20b; 22; 25a, 25b) of the antenna (11) of the RFID transponder (8) projects beyond the tang (5), in particular at a rear end (16) of the tang (5) facing away from a cutting edge (2) of the knife blade (1).

10. The knife (30; 31) according to any of the preceding claims, **characterized in that** it further includes, with respect to the tang (5), an additional metal substrate (17), in particular a metal foil or a metal plate, which engages under at least a portion (15, 20a, 20b) of the antenna (11) of the RFID transponder (8).

11. The knife (30; 31) according to claim 10, **characterized in that** the additional metal substrate (17) engages under a portion (20a, 20b) of the antenna (11) which projects beyond the tang (5).

12. The knife (30; 31) according to claim 10 or 11, **characterized in that** the additional metal substrate (17) is galvanically connected to the tang (5).

13. The knife (30; 31) according to any of the preceding claims, **characterized in that** the antenna (11) is arranged on a dielectric carrier (13) in the form of a layer.

14. A method for producing a knife (30; 31), in particular a knife (30) according to claim 1, the method comprising the steps of:
a) fixing a RFID transponder (8) to a tang (5), wherein the at least a planar portion (12a, 12b; 15; 18a, 18b; 21) of an antenna (11) of the RFID transponder (8) is arranged parallel with a planar lateral face (9) of the tang (5); and
b) producing a knife handle (14) by the tang (5) and the RFID transponder (8) being overmolded or cast-in with a plastics material, in particular using an injection-molding method.

15. The method according to claim 14, wherein an antenna (11) of the RFID transponder (8) is galvanically connected to the tang (5) in step a).

16. The method according to claim 15, wherein a soldering contact between the antenna (11) and the tang (5) is produced in step a).

17. The method according to claim 15, **characterized in that** in step a) a portion (21) of the antenna (11) is placed directly on the tang (5) and by heating a ripple-finish paint (23) or a heat-shrinkable sleeve, which surrounds the portion (21) of the antenna (11) and the tang (5), the antenna (11) and tang (5) are pressed together.

18. The method according to any of claims 14 to 17, **characterized in that** the RFID transponder (8) is adhesively bonded to the tang (5) in step a).

## Revendications

1. Couteau (30, 31) comprenant
- une lame de couteau (1) ayant une soie (5),
- un transpondeur RFID (8) qui est fixé à ladite soie (5), et
- un manche de couteau (14) qui entoure la soie (5) et le transpondeur RFID (8), dans lequel
la lame de couteau (1) est réalisée en métal, en particulier en acier,
**caractérisé par le fait que**
le transpondeur RFID (8) présente une antenne (11), et qu'au moins une partie (12a, 12b; 15; 18a, 18b; 21) de l'antenne (11) du transpondeur RFID (8) est réalisée de manière plane et est disposée parallèlement à une surface latérale (9; 19) plane de la soie (5).

2. Couteau (31) selon la revendication 1, **caractérisé par le fait que** l'antenne (11) du transpondeur RFID (8) est reliée galvaniquement à la soie (5).

3. Couteau (31) selon la revendication 2, **caractérisé par le fait que** l'antenne (11) du transpondeur RFID (8) présente deux sections d'antenne (21, 22; 25a, 25b) séparées galvaniquement l'une de l'autre, et qu'une seule des sections d'antenne (21; 25a) est reliée galvaniquement à la soie (5), en particulier dans lequel lesdites sections d'antenne (21, 22; 25a, 25b) présentent une capacité et/ou une inductance différentes.

4. Couteau (30, 31) selon l'une quelconque des revendications précédentes, **caractérisé par le fait que** ladite au moins une partie (12a, 12b; 15; 18a, 18b; 21) réalisée de manière plane de l'antenne (11), qui est disposée parallèlement à la surface latérale (9, 19) plane de la soie (5), est disposée devant la surface latérale (9; 19) plane à une distance (AB) de 2 mm au maximum, de préférence de 1 mm au maximum.

5. Couteau (30; 31) selon l'une quelconque des revendications précédentes, **caractérisé par le fait que** la soie (5) présente une ou plusieurs perforations (6a-6c) sur lesquelles s'étend l'antenne (11) du transpondeur RFID (8).

6. Couteau (30; 31) selon l'une quelconque des revendications précédentes, **caractérisé par le fait que** toutes les parties (12a, 12b; 18a, 18b) de l'antenne (11) du transpondeur RFID (8) sont réalisées chacune de manière plane et sont disposées parallèlement à une surface latérale (9, 19) plane de la soie (5).

7. Couteau (30; 31) selon la revendication 6, **caractérisé par le fait que** deux parties (18a, 18b) de l'antenne (11) sont disposées sur des surfaces latérales (9, 19) planes opposées de la soie (5).

8. Couteau (30; 31) selon la revendication 6, **caractérisé par le fait que** toutes les parties (12a, 12b) de l'antenne (11) sont disposées sur la même surface latérale (9) plane de la soie (5).

9. Couteau (30; 31) selon l'une quelconque des revendications 1 à 5, **caractérisé par le fait qu'**au moins une partie (20a, 20b; 22; 25a, 25b) de l'antenne (11) du transpondeur RFID (8) dépasse la soie (5), en particulier à une extrémité arrière (16) de la soie (5), qui montre dans la direction opposée à un tranchant (2) de la lame de couteau (1).

10. Couteau (30; 31) selon l'une quelconque des revendications précédentes, **caractérisé par le fait qu'**un support métallique (17) supplémentaire relatif à la soie (5), en particulier une feuille métallique ou une plaque métallique, est prévu qui s'étend sous au moins une partie (15, 20a, 20b) de l'antenne (11) du transpondeur RFID (8).

11. Couteau (30; 31) selon la revendication 10, **caractérisé par le fait que** ledit support métallique (17) supplémentaire s'étend sous une partie (20a, 20b) de l'antenne (11), qui dépasse la soie (5).

12. Couteau (30; 31) selon la revendication 10 ou 11, **caractérisé par le fait que** le support métallique (17) supplémentaire est relié galvaniquement à la soie (5).

13. Couteau (30; 31) selon l'une quelconque des revendications précédentes, **caractérisé par le fait que** l'antenne (11) est disposée sur un support diélectrique (13) en forme de couche.

14. Procédé de fabrication d'un couteau (30; 31), en particulier d'un couteau (30) selon la revendication 1, comprenant les étapes suivantes consistant à:
a) fixer un transpondeur RFID (8) à une soie (5), dans lequel au moins une partie plane (12a, 12b; 15; 18a, 18b; 21) d'une antenne (11) du transpondeur RFID (8) est disposée parallèlement à une surface latérale (9) plane de la soie (5).
b) fabriquer un manche de couteau (14) par le fait que la soie (5) et le transpondeur RFID (8) sont surmoulés par injection ou surmoulés d'une matière plastique, en particulier par le procédé de moulage par injection.

15. Procédé selon la revendication 14, dans lequel, à l'étape a), une antenne (11) du transpondeur RFID (8) est reliée galvaniquement à la soie (5).

16. Procédé selon la revendication 15, **caractérisé par le fait que**, à l'étape a), un contact à souder (24) est établi entre l'antenne (11) et la soie (5).

17. Procédé selon la revendication 15, **caractérisé par le fait que**, à l'étape a), une partie (21) de l'antenne (11) est appliquée directement sur la soie (5) et que, en chauffant une peinture vermicullée (23) ou une gaine thermorétractable qui enveloppe la partie (21) de l'antenne (11) et la soie (5), la partie (21) de l'antenne (11) et la soie (5) sont pressées l'une contre l'autre.

18. Procédé selon l'une quelconque des revendications 14 à 17, **caractérisé par le fait que**, à l'étape a), le transpondeur RFID (8) est collé sur la soie (5).
